(19) Europäisches Patentamt
European Patent Office
Office européen des brevets

(11) **EP 3 983 778 B1**

(12) **EUROPÄISCHE PATENTSCHRIFT**

(45) Veröffentlichungstag und Bekanntmachung des Hinweises auf die Patenterteilung:
**16.04.2025  Patentblatt 2025/16**

(21) Anmeldenummer: **20746539.4**

(22) Anmeldetag: **10.06.2020**

(51) Internationale Patentklassifikation (IPC):
**G01M 17/06** (2006.01)  **B60W 30/14** (2006.01)
**B60W 60/00** (2020.01)  **B25J 11/00** (2006.01)

(52) Gemeinsame Patentklassifikation (CPC):
**G01M 17/06; B60W 30/188;** B60W 2050/0011;
B60W 2050/0029; B60W 2540/10; B60W 2556/50;
B60W 2720/10; B60W 2720/106

(86) Internationale Anmeldenummer:
**PCT/AT2020/060237**

(87) Internationale Veröffentlichungsnummer:
**WO 2020/247996 (17.12.2020 Gazette 2020/51)**

(54) **VERFAHREN UND VORRICHTUNG ZUM KONTROLLIEREN VON PEDALEN EINES FAHRZEUGS**

METHOD AND DEVICE FOR CONTROLLING PEDALS OF A VEHICLE

PROCÉDÉ ET DISPOSITIF DE CONTRÔLE DE PÉDALES D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2019  AT 505332019**

(43) Veröffentlichungstag der Anmeldung:
**20.04.2022  Patentblatt 2022/16**

(73) Patentinhaber: **AVL List GmbH**
**8020 Graz (AT)**

(72) Erfinder:
• **JANY-LUIG, Johannes**
**8043 Graz (AT)**

• **GIGERL, Hans Peter**
**8061 Gutenberg-Stenzengreith (AT)**
• **WINKLER, Wolfgang**
**8212 Pischelsdorf in der Steiermark (AT)**
• **LEMMERER, David**
**8160 Weiz (AT)**

(74) Vertreter: **Mathys & Squire**
**Theatinerstraße 7**
**80333 München (DE)**

(56) Entgegenhaltungen:
DE-A1- 102014 012 319   DE-A1- 4 103 579
DE-A1- 4 240 756   US-A- 5 430 645
US-A1- 2005 096 183

**Beschreibung**

Die vorliegende Erfindung betrifft ein Verfahren zum Betreiben eines Fahrermodells zum Kontrollieren eines Fahrzeugs, eine Kontrollvorrichtung, die Verwendung der Kontrollvorrichtung zur Durchführung eines Testlaufs für ein Fahrzeug und ein Computerprogrammprodukt.

Im Stand der Technik sind Fahrermodelle, wie bspw. Algorithmen zum Kontrollieren eines Fahrzeugs bekannt, die mittels eines PI-Reglers einen Pedalwert zum Einstellen bspw. eines Fahrpedals eines Fahrzeugs lediglich in Abhängigkeit einer Differenz zwischen einer aktuellen Fahrzeuggeschwindigkeit und einer vorgegebenen Fahrzeuggeschwindigkeit ermitteln.

Beispielsweise offenbart die Patentschrift US5430645A ein fahrzeugeigenes Robotersystem zur Steuerung von Beschleunigung, Fahrt, Ausrollen, Bremsen und Leerlauf von Elektrofahrzeugen. Das System umfasst einen Mikroprozessor mit einem nichtflüchtigen Speicher, ein Modul zur Erkennung eines Strömungsabrisses, ein Anti-Roll-Modul, einen Bremsauslöser und einen Schalter sowie mehrere kundenspezifische Sensoren und Messwandler zur Betätigung verschiedener Steuerungen des Elektrofahrzeugs.

Die Patentschrift DE 4240756 A1 offenbart einen Roboter zum Betreiben eines Kraftfahrzeugs, der dazu in der Lage ist, den Motor des Kraftfahrzeugs sicher auch im Fall eines unvorhergesehenen Störfalls anzuhalten, wie z. B. des Ausfalls der Spannungsversorgung oder eines Betriebsfehlers.

Die Patentschrift DE4103579 A1 offenbart ein automatisches Testfahrzeug-Antriebssystem in Verbindung mit einem Chassis-Dynamometer, wobei eine Tabelle, die eine Beziehung zwischen dem Hub der Beschleunigungsbetätigungseinrichtung und dem Motorausgangsdrehmoment angibt, sowie eine Tabelle, die eine Beziehung zwischen dem Motorreibungsleistungsverlust und der Motordrehzahl angibt, durch einen Lehrvorgang vor dem Fahrtest des Fahrzeuges gespeichert werden.

Ein wie voranstehend beschrieben betriebenes Fahrermodell führt häufig zu sprunghaften Einstellungsvorgängen eines Fahrzeugs mit starken Beschleunigungsvorgängen und einem entsprechend unnötig hohen Kraftstoffverbrauch bzw. Schadstoffausstoß.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Fahrermodell bereitzustellen, das ein Fahrzeug kraftstoffeffizient und schadstoffarm betreibt.

Die voranstehende Aufgabe wird durch die Patentansprüche gelöst. Insbesondere wird die voranstehende Aufgabe durch den Gegenstand der jeweiligen unabhängigen Patentansprüche gelöst. Weitere Vorteile der Erfindung ergeben sich aus den Unteransprüchen, der Beschreibung und den Zeichnungen. Dabei gelten Merkmale und Details, die im Zusammenhang mit dem vorgestellten Verfahren beschrieben sind, selbstverständlich auch im Zusammenhang mit der erfindungsgemäßen Kontrollvorrichtung und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Verfahren zum Betreiben eines Fahrermodells zum Kontrollieren eines Fahrzeugs zur Durchführung eines Testlaufs für dieses Fahrzeug auf einem Prüfstand vorgestellt. Dabei umfasst das Fahrermodell ein Fahrzeugmodul, das eine an dem Fahrzeug einzustellende Pedalstellung ermittelt. Weiterhin wird mittels des Fahrzeugmoduls eine Bedarfsleistung als Anteil an einer Totalleistung, die von einem Antrieb des Fahrzeugs erbracht werden kann, ermittelt, wobei die Bedarfsleistung einer Leistung entspricht, die benötigt wird, um das Fahrzeug mit einer geforderten Geschwindigkeit und/oder einer geforderten Beschleunigung entlang eines vorgegeben Straßenverlaufs zu bewegen. Ferner sieht das vorgestellte Verfahren vor, dass der Bedarfsleistung ein Wert einer zulässigen Pedalstellung zugeordnet wird, und der Wert der zulässigen Pedalstellung, insbesondere einer Fahrpedalstellung, an das Fahrermodell zum Kontrollieren des Fahrzeugs übergeben wird. Es ist vorgesehen, dass das Fahrermodell ein Kontrollmodul umfasst, mittels dessen ein Stellwert zum Einstellen des Fahrpedals ermittelt wird, wobei der Stellwert dynamisch durch einen oberen Grenzwert begrenzt wird, der auf Grundlage des Werts der zulässigen Pedalstellung ermittelt wird.

Unter einem Fahrermodell ist im Kontext der vorliegenden Offenbarung ein Algorithmus zu verstehen, der zur Kontrolle eines Fahrzeugs eingesetzt wird. Insbesondere kann ein Fahrermodell zum Kontrollieren von Fahrfunktionen, wie bspw. zum Verstellen jeweiliger Pedale eines Fahrzeugs eingesetzt werden.

Das vorgestellte Verfahren dient insbesondere zum Begrenzen einer von einem Fahrzeug bereitzustellenden Leistung, um unnötige Beschleunigungssprünge, wie sie beim Betrieb eines Fahrzeugs durch ein Fahrermodell bspw. bei einem Schaltvorgang typisch sind, zu vermeiden. Dazu sieht das vorgestellte Verfahren das Ermitteln einer Bedarfsleistung vor, die für einen vorgegebenen Straßenverlauf bestimmt wird. Dabei kann der vorgegebene Straßenverlauf insbesondere ein mittels mindestens eines Sensors des Fahrzeugs erfasster Straßenverlauf und/oder ein mittels einer digitalen Karte für eine jeweilige zu befahrende Streckenführung ermittelter Straßenverlauf sein. Bspw. kann ein vorgegebener Straßenverlauf ein Abschnitt einer Straße sein, für den eine einzustellende Fahrzeuggeschwindigkeit gemäß einem vorgegebenen Testprotokoll vorgegeben ist.

Die erfindungsgemäß vorgesehene Bedarfsleistung wird als Anteil einer von einem Fahrzeug potentiell erbringbaren Gesamtleistung, bspw. in "%" ermittelt bzw. angegeben.

Die erfindungsgemäß vorgesehene Bedarfsleistung wird zum Erreichen einer für einen vorgegebenen Streckenverlauf vorgegebenen Beschleunigung und einer für den Streckenverlauf vorgegebenen Fahrzeuggeschwindigkeit von einem Antrieb eines jeweiligen Fahrzeugs angefordert. Dazu stellt das erfindungsgemäß vorgesehene Fahrermodell das Fahrzeug derart ein, dass das Fahrzeug die Bedarfsleistung bereitstellt. Dazu wird bspw. durch eine Recheneinheit unter Verwendung einer Zuordnungstabelle bzw. einer Zuordnungsfunktion einer jeweilig ermittelten Bedarfsleistung ein Wert einer zulässigen Pedalstellung zugeordnet und der Wert der zulässigen Pedalstellung an das erfindungsgemäß vorgesehene Fahrermodell übergeben.

Sobald das Fahrermodell den Wert der zulässigen Pedalstellung von dem Fahrzeugmodul übermittelt bekommt bzw. den Wert der zulässigen Pedalstellung mittels das Fahrzeugmoduls ermittelt, kann das Fahrermodell jeweilige Pedale des zu kontrollierenden Fahrzeugs dem Wert der zulässigen Pedalstellung entsprechend einstellen. Dazu kann bspw. der Wert der zulässigen Pedalstellung an eine Pedalkontrolleinheit übergeben werden, so dass die Pedalkontrolleinheit ein jeweiliges Pedal, insbesondere ein Fahrpedal des Fahrzeugs, höchstens bis zu einer Stellung bewegt, die dem Wert der zulässigen Pedalstellung entspricht oder im Wesentlichen entspricht. Die Stellung des Pedals entspricht dem Wert der zulässigen Pedalstellung im Wesentlichen dann, wenn sich das Pedal in einer Stellung befindet, die dem Wert der zulässigen Pedalstellung zuzüglich oder abzüglich eines vorgegebenen Toleranzbetrags von bspw. 5%, bevorzugt 2%, insbesondere bevorzugt 0,5% entspricht.

Der erfindungsgemäß vorgesehene Wert der zulässigen Pedalstellung dient insbesondere als Grenzwert, über den hinaus bzw. unter den eine durch ein Fahrermodell einzustellende Pedalstellung nicht verändert werden soll bzw. darf.

Entsprechend wirkt der erfindungsgemäß vorgesehene Wert der zulässigen Pedalstellung als Kontrollinstanz, die einer jeweiligen von einem Fahrermodell zum Kontrollieren eines Fahrzeugs verwendeten Regelung, wie bspw. einem PI-Regler überlagert wird, so dass für den Fall, dass das Fahrermodell einen Stellwert vorgibt, der zu einer Pedalstellung führt, die über oder unter dem Wert der zulässigen Pedalstellung liegt, der Stellwert automatisch durch den Wert der zulässigen Pedalstellung ersetzt wird bzw. der Stellwert automatisch dem Wert der zulässigen Pedalstellung entsprechend angepasst wird.

Mit anderen Worten wird ein Fahrzeug durch das vorgestellte Verfahren in seiner Leistung in Abhängigkeit einer zum Erreichen einer für einen jeweiligen Straßenverlauf bzw. Streckenabschnitt geforderten Fahrzeuggeschwindigkeit und Beschleunigung beschränkt bzw. gedrosselt.

Unter Verwendung des vorgestellten Verfahrens kann in Ausgestaltung auf einen PID-Regler zum Regeln einer Pedalkontrolleinheit verzichtet und stattdessen direkt mittels der erfindungsgemäß ermittelten Werte für eine zulässige Pedalstellung ein entsprechendes Fahrzeug bzw. eine entsprechende Pedalkontrolleinheit kontrolliert werden. Alternativ kann es vorgesehen sein, dass ein PID-Regler zum Glätten einer Vielzahl von erfindungsgemäß ermittelten Werten für eine zulässige Pedalstellung verwendet wird.

Um den erfindungsgemäß vorgesehenen Wert der zulässigen Pedalstellung zum Kontrollieren eines Fahrzeugs zu verwenden, kann der Wert der zulässigen Pedalstellung einem Kontrollmodul übergeben werden, das den Wert der zulässigen Pedalstellung in einen Grenzwert überführt, der einem Kontrollvorgang zum Einstellen eines Pedals zu Grunde gelegt wird.

Das Kontrollmodul kann bspw. ein zum Ermitteln eines Stellwerts eines Pedals eines Fahrzeugs ausgestalteter PI-Regler bzw. ein PID-Regler sein.

Es kann vorgesehen sein, dass die erfindungsgemäß vorgesehene Bedarfsleistung dadurch bereitgestellt wird, dass ein Bremspedal des Fahrzeugs gemäß einem Wert für eine zulässige Bremspedalstellung eingestellt wird.

Es kann weiterhin vorgesehen sein, dass mittels des Kontrollmoduls der obere Grenzwert für den Stellwert eines jeweiligen Pedals ermittelt wird, indem für den Fall, dass eine Leistungsanforderung, die von dem Antrieb des Fahrzeugs bereitzustellen ist, zunimmt, der obere Grenzwert der Leistungsanforderung entsprechend erhöht wird, und für den Fall, dass die aktuelle Leistungsanforderung kleiner ist als ein gewichteter Kennwert, der einem mit einem Gewichtungsfaktor gewichteten Wert einer der aktuellen Leistungsanforderung unmittelbar vorangehenden Leistungsanforderung entspricht, der gewichtete Wert als oberer Grenzwert gewählt wird.

Durch einen oberen Grenzwert, der in Abhängigkeit einer aktuellen Leistungsanforderung, die von einem Antrieb eines Fahrzeugs bereitzustellen ist, angepasst wird, kann eine dynamische, d.h. kontinuierlich angepasste, Begrenzung einer Leistungsabgabe des Fahrzeugs erfolgen, so dass auch bei einem Beschleunigungsvorgang ein Betriebszustand, in dem das Fahrzeug kraftstoffineffizient oder mit einem erhöhten bzw. suboptimalen Schadstoffausstoß betrieben wird, vermieden wird.

Es kann weiterhin vorgesehen sein, dass der Gewichtungsfaktor einem Wert kleiner eins entspricht.

Insbesondere kann der Gewichtungsfaktor einem Wert von "0,999" entsprechen.

Es kann vorgesehen sein, dass ein Übergabewert, der einem Kontrollmodul zum Ermitteln des oberen Grenzwerts übergeben wird, einem Wert der zulässigen Pedalstellung entspricht, der mit einem Faktor, wie bspw. dem Faktor "1,5" multipliziert wurde.

Durch einen faktorisierten Wert der zulässigen Pedalstellung als Übergabewert zum Ermitteln eines oberen Grenzwerts durch ein Kontrollmodul kann der obere Grenzwert mit einem Toleranzaufschlag gebildet werden, so dass das Fahrzeug auch in einem Betriebszustand betrieben werden kann, der, innerhalb eines durch einen entsprechenden Faktor vorgegebenen Toleranzbandes, mehr Leistung freigibt als durch den Wert der zulässigen Pedalstellung an sich vorgesehen.

Es kann weiterhin vorgesehen sein, dass der Stellwert durch einen unteren Grenzwert begrenzt wird, wobei der untere Grenzwert auf Grundlage des Werts der zulässigen Pedalstellung ermittelt wird oder der untere Grenzwert fest vorgegeben ist.

Mittels eines unteren Grenzwerts kann eine Minimalleistung, mit der ein Fahrzeug bei einer vorgegebenen Leistungsanforderung betrieben wird, vorgegeben werden. Dazu kann der untere Grenzwert auf Grundlage des Werts der zulässigen Pedalstellung ermittelt werden, so dass sich durch einen oberen Grenzwert und einen unteren Grenzwert ein Toleranzband ergibt, das sich in Abhängigkeit des Werts der zulässigen Pedalstellung ändert.

Es kann weiterhin vorgesehen sein, dass das Fahrermodell ein Zielbeschleunigungsbestimmungsmodul umfasst, mittels dessen eine durch das Fahrzeug zu erbringende Beschleunigungsleistung ermittelt wird, indem für eine Geschwindigkeitsdifferenz zwischen einer für mindestens einen zukünftigen Zeitpunkt geforderten Geschwindigkeit und einer für einen aktuellen Zeitpunkt geforderten Geschwindigkeit ermittelt wird und anhand der ermittelten Geschwindigkeitsdifferenz eine zum Ausgleichen der Geschwindigkeitsdifferenz benötigte Beschleunigungsleistung ermittelt wird. Dabei ist weiterhin vorgesehen, dass das Zielbeschleunigungsbestimmungsmodul die ermittelte Beschleunigungsleistung dem Fahrermodell als geforderte Beschleunigungsleistung übergibt.

Durch eine Geschwindigkeitsdifferenz zwischen einer für mindestens einen zukünftigen Zeitpunkt geforderten Geschwindigkeit und einer für einen aktuellen Zeitpunkt geforderten Geschwindigkeit kann eine Vorhersageperiode gebildet werden, für die eine benötigte Beschleunigungsleistung anhand der Geschwindigkeitsdifferenz berechnet werden kann. Bei einer Vorhersageperiode von einer bekannten bzw. vorgegebenen Dauer kann eine zu einem bekannten Zeitpunkt, nämlich einem Ende der Vorhersageperiode bei einem gleichbleibenden Fahrzeugverhalten zu erwartende Geschwindigkeitsdifferenz in eine Beschleunigungsleistung transformiert werden, die benötigt wird, um die Geschwindigkeitsdifferenz innerhalb der Vorhersageperiode zu überwinden. Dabei kann eine Vorhersageperiode eine Dauer von bspw. zwischen 0,001 Sekunden und 5 Sekunden, insbesondere zwischen 0,001 Sekunden und 2 Sekunden einnehmen.

Es kann weiterhin vorgesehen sein, dass eine benötigte Beschleunigungsleistung anhand einer Vielzahl von Geschwindigkeitsdifferenzen für eine Vielzahl von zukünftig geforderten Geschwindigkeiten ermittelt wird. Es kann bspw. vorgesehen sein, dass für jede Sekunde innerhalb einer Vorhersageperiode eine Geschwindigkeitsdifferenz und eine entsprechende Beschleunigungsleistung ermittelt wird. Dabei kann vorgesehen sein, dass eine zukünftige geforderte Geschwindigkeit mit einem vorgegebenen Arbeitstakt von bspw. 100 Millisekunden oder 1000 Millisekunden Dauer bestimmt wird. Entsprechend kann für jeden Arbeitstakt eine entsprechende Beschleunigungsleistung ermittelt werden.

Anhand der ermittelten Beschleunigungsleistung kann eine Bedarfsleistung ermittelt werden, die an einem Fahrzeug einzustellen ist, um das Fahrzeug mit der ermittelten Beschleunigungsleistung zu beschleunigen, so dass das Fahrzeug entsprechend innerhalb der Vorhersageperiode die vorgegebene Geschwindigkeit erreicht bzw. die Geschwindigkeitsdifferenz minimiert. Dazu kann einer jeweiligen Beschleunigungsleistung bspw. mittels einer Zuordnungstabelle oder einer Zuordnungsfunktion eine Bedarfsleistung bzw. ein entsprechender Wert einer zulässigen Pedalstellung zugeordnet werden.

In einem zweiten Aspekt betrifft die vorgestellte Erfindung eine Kontrollvorrichtung zum Betreiben eines Fahrermodells zum Kontrollieren eines Fahrzeugs. Die Kontrollvorrichtung umfasst zur Durchführung eines Testlaufs für dieses Fahrzeug ein Fahrermodul, das dazu konfiguriert ist, das Fahrermodell zu betreiben. Das Fahrermodul umfasst ein Fahrzeugmodul, das dazu konfiguriert ist, eine an dem Fahrzeug einzustellende Pedalstellung zu ermitteln. Das Fahrermodul umfasst ein Bedarfsermittlungsmodul, das dazu konfiguriert ist, eine Bedarfsleistung als Anteil an einer Totalleistung, die von einem Antrieb des Fahrzeugs erbracht werden kann, zu ermitteln, wobei die Bedarfsleistung einer Leistung entspricht, die benötigt wird, um das Fahrzeug mit einer geforderten Geschwindigkeit und/oder einer geforderten Beschleunigung entlang eines vorgegeben Streckenverlaufs zu bewegen. Weiterhin umfasst das Fahrermodul ein Zuordnungsmodul, das dazu konfiguriert ist, der Bedarfsleistung einen Wert einer zulässigen Pedalstellung zuzuordnen, und ein Übergabemodul, das dazu konfiguriert ist, den Wert der zulässigen Pedalstellung an das Fahrermodell zum Kontrollieren des Fahrzeugs zu übergeben. Es ist vorgesehen, dass das Fahrermodul ein Kontrollmodul umfasst, das dazu konfiguriert ist, einen Stellwert zum Einstellen eines Fahrpedals zu ermitteln, wobei das Kontrollmodul dazu konfiguriert ist, den Stellwert dynamisch durch einen oberen Grenzwert zu begrenzen, und den oberen Grenzwert auf Grundlage des Werts der zulässigen Pedalstellung zu ermitteln.

Damit bringt ein erfindungsgemäßes Verfahren die gleichen Vorteile mit sich, wie sie ausführlich mit Bezug auf die erfindungsgemäße Vorrichtung beschrieben worden sind.

Es kann weiterhin vorgesehen sein, dass das Fahrermodul ein Zielbeschleunigungsbestimmungsmodul umfasst, das dazu konfiguriert ist, eine durch das Fahrzeug zu erbringende Beschleunigungsleistung zu ermitteln, indem für eine Geschwindigkeitsdifferenz zwischen einer für mindestens einen zukünftigen Zeitpunkt geforderten Geschwindigkeit und einer für einen aktuellen Zeitpunkt geforderten Geschwindigkeit ermittelt wird und anhand der ermittelten Geschwindigkeitsdifferenz die zum Ausgleichen der Geschwindigkeitsdifferenz zu erbringende Beschleunigungsleistung ermittelt wird, wobei das Fahrermodul dazu konfiguriert ist, die ermittelte zu erbringende Beschleunigungsleistung dem Fahrermodell als geforderte Beschleunigungsleistung zu übergeben.

Das Zielbeschleunigungsbestimmungsmodul kann eine geforderte Zielbeschleunigungsleistung bspw. unter Verwendung von Formel (1) ermitteln.

$$a_{dem} = v_{dem}(t + \Delta t) - v_{act}(t) \qquad (1)$$

Dabei gilt

$$„v_{dem}"$$

entspricht einer geforderten Zielbeschleunigungsleistung,

$$„v_{dem}"$$

einer geforderten Zielgeschwindigkeit, "$v_{act}$" einer aktuellen Geschwindigkeit und "t" der Zeit in [Sekunden].

In einem dritten Aspekt betrifft die vorgestellte Erfindung die Verwendung der vorgestellten Kontrollvorrichtung zur Durchführung eines Testlaufs für ein Fahrzeug.

Zum Durchführen eines Testlaufs, wie bspw. eines Testlaufs zur Erfassung von Fahrzeugemissionen im Realbetrieb, kann die vorgestellte Kontrollvorrichtung ein zu testendes Fahrzeug unter Verwendung jeweilig ermittelter Pedalstellungen bzw. unter Verwendung jeweilig ermittelter Geschwindigkeits- und/oder Beschleunigungswerte steuern.

In einem vierten Aspekt betrifft die vorgestellte Erfindung ein Computerprogrammprodukt umfassend Programmcodemittel, die einen Computer zum Durchführen aller Schritte gemäß mindestens einer möglichen Ausgestaltung des vorgestellten Verfahrens konfigurieren, wenn diese auf dem Computer ausgeführt werden.

Das erfindungsgemäße Computerprogrammprodukt kann als computerlesbarer Anweisungscode in jeder geeigneten Programmiersprache wie beispielsweise in JAVA oder C++ implementiert sein. Das Computerprogrammprodukt kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie die Kontrollvorrichtung derart programmieren, dass die gewünschten Funktionen ausgeführt werden. Ferner kann das Computerprogrammprodukt in einem Netzwerk wie beispielsweise dem Internet bereitgestellt werden bzw. sein, von dem es bei Bedarf von einem Nutzer heruntergeladen werden kann. Das Computerprogrammprodukt kann sowohl mittels eines Computerprogramms, d. h. einer Software, als auch mittels einer oder mehrerer spezieller elektronischer Schaltungen, d.h. in Hardware, oder in beliebig hybrider Form, d. h. mittels Software-Komponenten und Hardware-Komponenten, realisiert werden bzw. sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:

Figur 1 ein Ablaufdiagramm eines Ablaufs einer möglichen Ausgestaltung des erfindungsgemäßen Verfahrens.

Figur 2 eine Darstellung einer möglichen Ausgestaltung der erfindungsgemäßen Kontrollvorrichtung.

Figur 3 eine Visualisierung einer möglichen Ausgestaltung eines Kontrollmoduls.

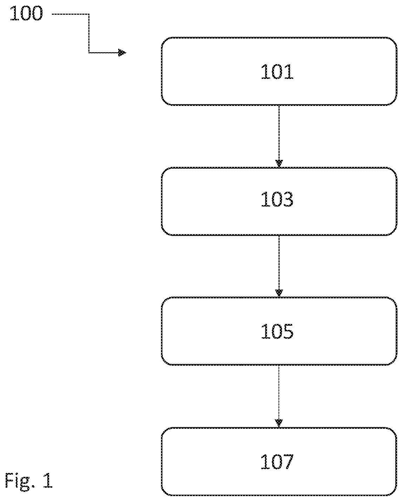

In Fig. 1 ist schematisch ein Ablauf 100 einer möglichen Ausgestaltung des vorgestellten Verfahrens dargestellt.

In einem ersten Ermittlungsschritt 101 wird mittels eines Fahrermoduls eines Fahrermodells, das auf einem Computer ausgeführt wird, eine an einem Fahrzeug einzustellende Pedalstellung, vorliegend beispielhaft eine Fahrpedalstellung, ermittelt.

Zum Ermitteln der an dem Fahrzeug einzustellenden Fahrpedalstellung wird durch das Fahrermodul in einem zweiten Ermittlungsschritt 103 eine Bedarfsleistung als Anteil an einer Totalleistung, die von einem Antrieb des Fahrzeugs erbracht werden kann, ermittelt. Dabei entspricht die Bedarfsleistung einer Leistung, die benötigt wird, um das Fahrzeug mit einer geforderten Geschwindigkeit, d.h. einer für einen vorgegebenen Straßenverlauf vorgegebenen Geschwindigkeit, und einer geforderten Beschleunigung entlang des vorgegebenen Straßenverlaufs zu bewegen. Dabei kann die geforderte Beschleunigungsleistung bspw. anhand der geforderten Geschwindigkeit ermittelt werden, indem bspw. eine Geschwindigkeitsdifferenz zwischen einer aktuellen Geschwindigkeit des Fahrzeugs und einer zu einem bekannten Zeitpunkt geforderten Geschwindigkeit bestimmt wird. Dabei entspricht die geforderte Beschleunigung derjenigen Beschleunigung, die benötigt wird, um ausgehend von der aktuellen Geschwindigkeit zu dem bekannten Zeitpunkt die zu dem bekannten Zeitpunkt geforderte Geschwindigkeit zu erreichen.

In einem Zuordnungsschritt 105 wird der ermittelten Bedarfsleistung ein Wert einer zulässigen Fahrpedalstellung zugeordnet. Dabei ist der Wert der zulässigen Fahrpedalstellung derart gewählt, dass unter Bereitstellung der ermittelten Bedarfsleistung ein Kraftstoffverbrauch und/oder ein Schadstoffausstoß des Fahrzeugs minimal wird.

In einem Übergabeschritt 107 wird der Wert der zulässigen Fahrpedalstellung an das Fahrermodell zum Kontrollieren des Fahrzeugs übergeben. Entsprechend kontrolliert das Fahrermodell bspw. ein Pedalkontrollgerät derart, dass ein Pedal des Fahrzeugs höchstens bis zu dem Wert der zulässigen Fahrpedalstellung bewegt wird. Dazu kann das Fahrermodell bspw. einen entsprechenden Kontrollbefehl, der das Pedalkontrollgerät dazu konfiguriert das Pedal gemäß einer durch den Kontrollbefehl vorgegebenen Kennlinie zu bewegen oder der dem Pedalkontrollgerät einen entsprechenden Grenzwert vorgibt, der eine Bewegung des Pedals gemäß dem Wert der zulässigen Fahrpedalstellung begrenzt.

Das Fahrermodul verwendet ein Fahrzeugmodell zum Ermitteln einer relativen Bedarfsleistung unter Verwendung von Formel (2) und (3).

$$P_{dem} = F_{total} \cdot v_{dem} \qquad (2),$$

$$P_{rel} = \frac{P_{dem}}{P_{max}} \cdot 100\% \qquad (3).$$

Dabei gilt: "$v_{dem}$" ist eine aktuelle Zielgeschwindigkeit in Meter pro Sekunde und

$$F_{total} = F_{Luft} + F_{Ine} + F_{Prop},$$

wobei

$$F_{Luft} = A_0 + B_0 \cdot v_{dem} + C_0 \cdot v_{dem}^2,$$

$$F_{Ine} = m \cdot g \cdot v_{dem} \cdot \sin \alpha,$$

und

$$F_{Prop} = m \cdot \alpha_{dem},$$

"$P_{rel}$" entspricht einer Bedarfsleistung, $P_{dem}$ einer geforderten Leistung, $P_{max}$ einer Maximalleistung eines jeweiligen Fahrzeugs, $v_{dem}$ einer geforderten Geschwindigkeit. Die Parameter $m$, $Pmax$, $A_0$, $B_0$ and $C_0$ sind Variablen der Funktion, die Erdbeschleunigung g entspricht 9,81 m/s$^2$ im Quadrat und der Neigungswinkel bestimmt sich durch

$$\alpha = \tan^{-1}\frac{r\varphi}{100}.$$

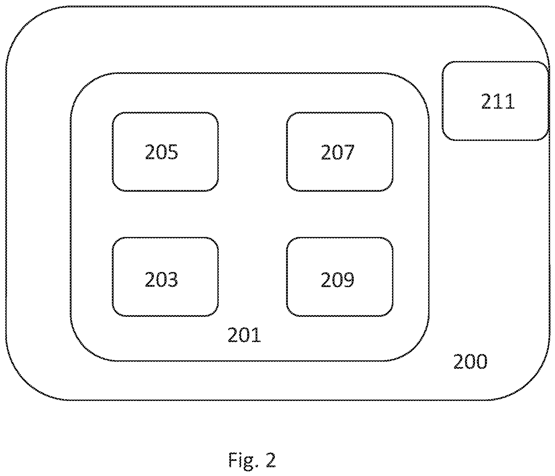

In Fig. 2 ist eine Kontrollvorrichtung 200 dargestellt. Die Kontrollvorrichtung 200 umfasst ein Fahrermodul 201, das dazu konfiguriert ist, ein Fahrermodell zu betreiben.

Das Fahrermodul 201 umfasst ein Fahrzeugmodul 203, das dazu konfiguriert ist, eine an dem Fahrzeug einzustellende Fahrpedalstellung zu ermitteln.

Ferner umfasst das Fahrermodul 201 ein Bedarfsermittlungsmodul 205, das dazu konfiguriert ist, eine Bedarfsleistung als Anteil an einer Totalleistung, die von einem Antrieb des Fahrzeugs erbracht werden kann, zu ermitteln, wobei die Bedarfsleistung einer Leistung entspricht, die benötigt wird, um das Fahrzeug mit einer geforderten Geschwindigkeit und/oder einer geforderten Beschleunigung entlang eines vorgegeben Streckenverlaufs zu bewegen.

Ferner umfasst das Fahrermodul 201 ein Zuordnungsmodul 207, das dazu konfiguriert ist, der Bedarfsleistung einen Wert einer zulässigen Fahrpedalstellung zuzuordnen.

Ferner umfasst das Fahrermodul 201 ein Übergabemodul 209 umfasst, das dazu konfiguriert ist, den Wert der zulässigen Pedalstellung an das Fahrermodell zum Kontrollieren des Fahrzeugs zu übergeben.

Mittels einer Schnittstelle 211, die bspw. als drahtlosschnittstelle oder als kabelgebundene Schnittstelle ausgestaltet sein kann, steht die Kontrollvorrichtung 200 in kommunikativer Verbindung mit einem Fahrzeug bzw. einer Aktuatorik, wie bspw. einem Pedalsteller, zum Kontrollieren eines Fahrzeugs.

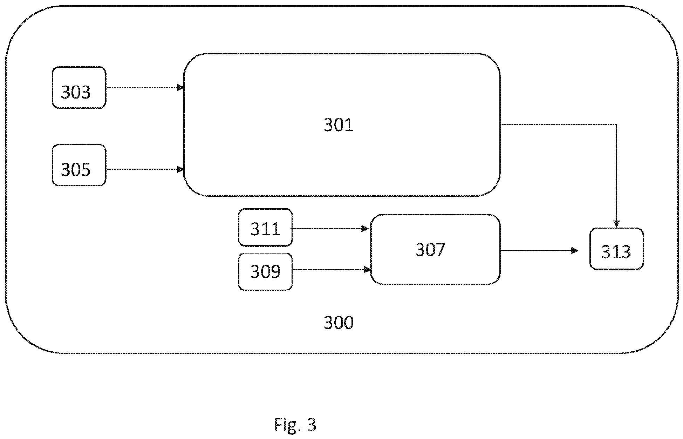

In Fig. 3 ist ein Kontrollmodul 300 dargestellt. Das Kontrollmodul 300 umfasst eine Bestimmungseinheit 301 zum adaptiven bzw. dynamischen Bestimmen eines oberen Grenzwerts und eines unteren Grenzwerts einer zulässigen Fahrpedalstellung.

Als Eingangssignal erhält die Bestimmungseinheit 301 einen aktuellen Wert einer Fahrpedalstellung 303 aus einer Pedalvorsteuerungseinheit und eine vorgegebene Minimalwertfunktion 305, anhand derer der untere Grenzwert direkt bestimmt wird. Die vorgegebene Minimalwertfunktion 305 kann bspw. eine Funktion oder eine Zuordnungstabelle zum Bestimmen einer Minimalstellung eines Fahrpedals sein.

Ferner bestimmt die Bestimmungseinheit 301 anhand einer Bedarfsleistung, die für einen jeweiligen Straßenverlauf bzw. Streckenabschnitt erforderlich ist, den oberen Grenzwert der zulässigen Fahrpedalstellung.

Ferner umfasst das Kontrollmodul 300 einen PID-Regler 307, der anhand einer aktuellen Fahrzeugbeschleunigung 309 und einer für den jeweiligen Straßenverlauf bzw. Streckenabschnitt geforderten Beschleunigung 311 einen Wert 313 zum Einstellen des Fahrpedals des Fahrzeugs bestimmt.

Die Bestimmungseinheit 301 gleicht einen von dem PID-Regler ermittelten Wert 313 zum Einstellen des Fahrpedals mit dem unteren und dem oberen Grenzwert ab. Sollte der von dem PID-Regler 307 ermittelte Wert größer als der obere Grenzwert oder kleiner als der untere Grenzwert sein, wird eine entsprechende Bewegung des Fahrpedals über den oberen Grenzwert oder unter den unteren Grenzwert verhindert, indem bspw. der durch den PID-Regler 307 ermittelt Wert durch den oberen oder den unteren Grenzwert ersetzt wird.

Alternativ kann vorgesehen sein, dass durch das Bestimmungsmodul der PID-Regler 307 ersetzt wird oder dass der PID-Regler 307 dem Bestimmungsmodul nachgeschaltet wird, um von dem Bestimmungsmodul ermittelte Werte zu glätten bzw. Schwankungen in den von dem Bestimmungsmodul ermittelten Werten auszugleichen.

Der obere Grenzwert und der untere Grenzwert werden kontinuierlich in Abhängigkeit des Straßenverlaufs und einer aktuellen Fahrzeuggeschwindigkeit und/oder der aktuellen Geschwindigkeit des Fahrzeugs aktualisiert.

Dabei kann der Wert zum Einstellen des Fahrpedals bspw. mittels der folgenden Formeln (4), (5) ermittelt werden:

$$y(t) = u(t) \qquad (4)$$

Formel (4) gilt für folgende Bedingung: $u(t) \geq 0{,}999 y(t - 1)$, andernfalls gilt Formel (5).

$$y(t) = 0{,}999 y(t - 1) \qquad (5)$$

Dabei gilt: "$y(t)$" entspricht einem Wert zum Einstellen eines Fahrpedals, "$u(t)$" einem Eingangswert, wie bspw. einem mittels eines Faktors von insbesondere 1,5 faktorisierter Wert zum Einstellen eines Fahrpedals, der in einem aktuellen Zeitpunkt unmittelbar vorangehenden Stellschritt ermittelt wurde, "t" entspricht der Zeit in [Sekunden], "0,999" einem Gewichtungswert.

Die Erfindung lässt neben den dargestellten Ausführungsformen weitere Gestaltungsgrundsätze zu. Dies bedeutet, die Erfindung soll nicht auf die mit Bezug auf die Figuren erläuterten Ausführungsbeispiele beschränkt betrachtet werden.

## Bezugszeichenliste

| | |
|---|---|
| 100 | Ablauf |
| 101 | erster Ermittlungsschritt |
| 103 | zweiter Ermittlungsschritt |
| 105 | Zuordnungsschritt |
| 107 | Übergabeschritt |
| 200 | Kontrollvorrichtung |
| 201 | Fahrermodul |
| 203 | Fahrzeugmodul |
| 205 | Bedarfsermittlungsmodul |
| 207 | Zuordnungsmodul |
| 209 | Übergabemodul |
| 211 | Schnittstelle |
| 300 | Kontrollmodul |
| 301 | Bestimmungseinheit |
| 303 | Wert einer Fahrpedalstellung |
| 305 | Minimalwertfunktion |
| 307 | PID-Regler |
| 309 | Wert einer aktuellen Fahrzeugbeschleunigung |
| 311 | geforderte Beschleunigung |
| 313 | Wert zum Einstellen des Fahrpedals |

## Patentansprüche

1. Verfahren zum Betreiben eines Fahrermodells zum Kontrollieren eines Fahrzeugs zur Durchführung eines Testlaufs für dieses Fahrzeug, wobei

   das Fahrermodell ein Fahrzeugmodul (203) umfasst, das eine an dem Fahrzeug einzustellende Pedalstellung ermittelt, wobei
   mittels des Fahrzeugmoduls (203) eine Bedarfsleistung als Anteil an einer Totalleistung, die von einem Antrieb des Fahrzeugs erbracht werden kann, ermittelt wird, wobei
   die Bedarfsleistung einer Leistung entspricht, die benötigt wird, um das Fahrzeug mit einer geforderten Geschwindigkeit und/oder einer geforderten Beschleunigung (311) entlang eines vorgegeben Straßenverlaufs zu bewegen, und wobei
   der Bedarfsleistung ein Wert (313) einer zulässigen Pedalstellung zugeordnet wird, und wobei der Wert (313) der zulässigen Pedalstellung an das Fahrermodell zum Kontrollieren des Fahrzeugs übergeben wird, **dadurch gekennzeichnet, dass**
   das Fahrermodell ein Kontrollmodul (300) umfasst, mittels dessen ein Stellwert zum Einstellen des Fahrpedals ermittelt wird, wobei der Stellwert dynamisch durch einen oberen Grenzwert begrenzt wird, der auf Grundlage des Werts (313) der zulässigen Pedalstellung ermittelt wird.

**2.** Verfahren nach Anspruch 1, **dadurch gekennzeichnet, dass**

mittels des Kontrollmoduls (300) der obere Grenzwert für den Stellwert des Pedals ermittelt wird, indem für den Fall, dass eine Leistungsanforderung, die von dem Antrieb des Fahrzeugs bereitzustellen ist, zunimmt, der obere Grenzwert der Leistungsanforderung entsprechend erhöht wird, und

für den Fall, dass die aktuelle Leistungsanforderung kleiner ist als ein gewichteter Kennwert, der einem mit einem Gewichtungsfaktor gewichteten Wert einer der aktuellen Leistungsanforderung unmittelbar vorangehenden Leistungsanforderung entspricht, der gewichtete Wert als oberer Grenzwert gewählt wird.

**3.** Verfahren nach Anspruch 2, **dadurch gekennzeichnet, dass**
ein Übergabewert, der dem Kontrollmodul (300) zum Ermitteln des oberen Grenzwerts übergeben wird, einem Wert der zulässigen Pedalstellung entspricht, der mit einem Faktor multipliziert wurde.

**4.** Verfahren nach Anspruch 2 oder 3, **dadurch gekennzeichnet, dass**
der Gewichtungsfaktor einem Wert kleiner eins entspricht.

**5.** Verfahren nach einem der Ansprüche 1 bis 4, **dadurch gekennzeichnet, dass**
das Kontrollmodul (300) den Stellwert mittels eines PID-Reglers (307) einstellt.

**6.** Verfahren nach einem der Ansprüche 1 bis 5, **dadurch gekennzeichnet, dass**

der Stellwert durch einen unteren Grenzwert begrenzt wird, wobei
der untere Grenzwert auf Grundlage des Werts (313) der zulässigen Pedalstellung ermittelt wird oder der untere Grenzwert fest vorgegeben ist.

**7.** Verfahren nach einem der voranstehenden Ansprüche, **dadurch gekennzeichnet, dass**

das Fahrermodell ein Zielbeschleunigungsbestimmungsmodul umfasst, mittels dessen eine durch das Fahrzeug zu erbringende Beschleunigungsleistung ermittelt wird, indem für eine Geschwindigkeitsdifferenz zwischen einer für mindestens einen zukünftigen Zeitpunkt geforderten Geschwindigkeit und einer für einen aktuellen Zeitpunkt geforderten Geschwindigkeit ermittelt wird und
anhand der ermittelten Geschwindigkeitsdifferenz eine zum Ausgleichen der Geschwindigkeitsdifferenz zu erbringende Beschleunigungsleistung ermittelt wird, und wobei das Zielbeschleunigungsbestimmungsmodul die ermittelte zu erbringende Beschleunigungsleistung dem Fahrermodell als geforderte Beschleunigungsleistung übergibt.

**8.** Verfahren nach einem der voranstehenden Ansprüche, **dadurch gekennzeichnet, dass**
der vorgegebene Straßenverlauf ein mittels mindestens eines Sensors des Fahrzeugs erfasster Straßenverlauf und/oder ein mittels einer digitalen Karte für eine jeweilige zu befahrende Streckenführung ermittelter Straßenverlauf ist.

**9.** Kontrollvorrichtung (200) zum Betreiben eines Fahrermodells zum Kontrollieren eines Fahrzeugs, wobei die Kontrollvorrichtung zur Durchführung eines Testlaufs für dieses Fahrzeug ein Fahrermodul (201) umfasst, das dazu konfiguriert ist, das Fahrermodell zu betreiben, wobei das Fahrermodul ein Fahrzeugmodul (203) umfasst, das dazu konfiguriert ist,

eine an dem Fahrzeug einzustellende Pedalstellung zu ermitteln, wobei
das Fahrermodul ein Bedarfsermittlungsmodul (205) umfasst, das dazu konfiguriert ist, eine Bedarfsleistung als Anteil an einer Totalleistung, die von einem Antrieb des Fahrzeugs erbracht werden kann, zu ermitteln, wobei die Bedarfsleistung einer Leistung entspricht, die benötigt wird, um das Fahrzeug mit einer geforderten Geschwindigkeit und/oder einer geforderten Beschleunigung entlang eines vorgegeben Streckenverlaufs zu bewegen, und wobei das Fahrermodul ein Zuordnungsmodul (207) umfasst, das dazu konfiguriert ist, der Bedarfsleistung einen Wert (313) einer zulässigen Pedalstellung zuzuordnen, und wobei das Fahrermodul ein Übergabemodul (209) umfasst, das dazu konfiguriert ist, den Wert (313) der zulässigen Pedalstellung an das Fahrermodell zum Kontrollieren des Fahrzeugs zu übergeben, **dadurch gekennzeichnet, dass**
das Fahrermodul ein Kontrollmodul (300) umfasst, das dazu konfiguriert ist einen Stellwert zum Einstellen des Fahrpedals zu ermitteln, wobei
das Kontrollmodul (300) dazu konfiguriert ist, den Stellwert dynamisch durch einen oberen Grenzwert zu begrenzen, und den oberen Grenzwert auf Grundlage des Werts (313) der zulässigen Pedalstellung zu ermitteln.

**10.** Kontrollvorrichtung nach Anspruch 9, **dadurch gekennzeichnet, dass**
das Fahrermodul (201) ein Zielbeschleunigungsbestimmungsmodul umfasst, das dazu konfiguriert ist, eine durch das Fahrzeug zu erbringende Beschleunigungsleistung zu ermitteln, indem für eine Geschwindigkeitsdifferenz zwischen einer für mindestens einen zukünftigen Zeitpunkt geforderten Geschwindigkeit und einer für einen aktuellen Zeitpunkt geforderten Geschwindigkeit ermittelt wird und anhand der ermittelten Geschwindigkeitsdifferenz die zum Ausgleichen der Geschwindigkeitsdifferenz zu erbringende Beschleunigungsleistung ermittelt wird, wobei das Fahrermodul (201) dazu konfiguriert ist, die ermittelte zu erbringende Beschleunigungsleistung dem Fahrermodell als geforderte Beschleunigungsleistung zu übergeben.

11. Verwendung einer Kontrollvorrichtung (200) nach einem der Ansprüche 9 oder 10, zur Durchführung eines Testlaufs für ein Fahrzeug.

12. Computerprogrammprodukt umfassend Programmcodemittel, die einen Computer zum Durchführen aller Schritte gemäß mindestens einem Verfahren der Ansprüche 1 bis 8 konfigurieren, wenn diese auf dem Computer ausgeführt werden.

**Claims**

1. Method of operating a driver model for controlling a vehicle to perform a test run for said vehicle, wherein

   the driver model comprises a vehicle module (203) which determines a pedal position to be set on the vehicle, wherein
   a required power is determined by means of the vehicle module (203) as a component of a total power which can be provided by a drive system of the vehicle, wherein
   the required power corresponds to a power required to move the vehicle at a required speed and/or a required acceleration (311) along a predefined road course, and wherein
   a value (313) of a permissible pedal position is assigned to the required power, and wherein
   the value (313) of the permissible pedal position is transmitted to the driver model for controlling the vehicle, **characterized in that**
   the driver model comprises a control module (300) by means of which a actuating value for adjusting the accelerator pedal is determined,
   the control value being dynamically limited by an upper limit value which is determined on the basis of the value (313) of the permissible pedal position.

2. Method according to claim 1, **characterized in that**

   the control module (300) is used to determine the upper limit value for the actuating value of the pedal by increasing the upper limit value of the power demand accordingly in the event that a power demand to be provided by the drive system of the vehicle increases, and
in the event that the current power requirement is less than a weighted characteristic value that corresponds to a value weighted with a weighting factor of a power requirement immediately preceding the current power requirement, the weighted value is selected as the upper limit value.

3. Method according to claim 2, **characterized in that** a transmitted value which is transmitted to the control module (300) to determine the upper limit value corresponds to a value of the permissible pedal position which was multiplied by a factor.

4. Method according to claim 2 or 3, **characterized in that** the weighting factor corresponds to a value less than one.

5. Method according to one of claims 1 to 4, **characterized in that** the control module (300) adjusts the actuating value by means of a PID controller (307).

6. Method according to one of claims 1 to 5, **characterized in that** the actuating

   value is limited by a lower limit value, wherein the lower limit value is determined on the basis of the value (313) of the permissible pedal position or the lower limit value is specified.

7. Method according to one of the preceding claims, **characterized in that** the driver model

   comprises a target acceleration determination module by means of which an acceleration power to be provided by the vehicle is determined **in that** a speed difference between a speed required for at least one future time and a speed required for a current time is determined, and
   an acceleration power required in order to equalise the difference in speed is determined on the basis of the determined difference in speed, and the target acceleration determination module transmits the determined required acceleration power to the driver model as the required acceleration power.

8. Method according to one of the preceding claims, **characterized in that** the predefined course of the road is a road course registered by means of at least one sensor of the vehicle and/or a road course determined by means of a digital map for a respective route which is to be driven.

9. Control device (200) for operating a driver model for controlling a vehicle, the control device comprising a driver module (201) configured to operate the driver model to perform a test run for that vehicle, wherein the driver module comprising a vehicle module (203) configured to

> determine a pedal position to be set on the vehicle, whereby
> the driver module comprises a requirement determination module (205) configured to determine a required power as a component of a total power that can be generated by a drive system of the vehicle, wherein the required power corresponds to a power that is necessary for moving the vehicle at a required speed and/or a required acceleration along a predefined road course, and wherein
> the driver module comprises an assignment module (207) which is configured to assign a value (313) of a permissible pedal position to the required power, and wherein
> the driver module comprises a transmitter module (209) configured to transmit the value (313) of the permitted pedal position to the driver model for controlling the vehicle, **characterized in that**
> the driver module comprises a control module (300) configured to determine an actuating value for adjusting the accelerator pedal, wherein the control module (300) is configured to dynamically limit the actuating value by an upper limit value, and to determine the upper limit value on the basis of the value (313) of the permissible pedal position.

10. Control device according to claim 9, **characterized in that**
the driver module (201) comprises a target acceleration determination module configured to an acceleration power to be provided by the vehicle **in that** a difference in speed between a speed required for at least a future time and a speed required for a current time is determined, and using the determined difference in speed to determine the acceleration power required in order to equalise the difference in speed, wherein the driver module (201) is configured to determine the required acceleration power to the driver model as the required acceleration power.

11. Use of a control device (200) according to any one of claims 9 or 10, to carry out a test run for a vehicle.

12. Computer program product comprising program code means which configure a computer to carry out all of the steps according of at least one method of claims 1 to 8 when executed on the computer.

## Revendications

1. Procédé d'exploitation d'un modèle de conducteur permettant de contrôler un véhicule afin d'effectuer une marche d'essai pour le présent véhicule, dans lequel

> le modèle de conducteur comprend un module de véhicule (203)qui détermine une position de pédale à régler sur le véhicule, dans lequel
> au moyen du module de véhicule (203), on détermine une puissance requise en pourcentage d'une puissance totale qui peut être fournie par un entraînement du véhicule, dans lequel
> la puissance requise correspond à une puissance nécessaire pour déplacer le véhicule à une vitesse requise et/ou une accélération requise (311) le long d'un tracé de route prédéterminé, et dans lequel
> une valeur (313) d'une position de pédale admissible est affectée à la puissance requise, et dans lequel
> la valeur (313) de la position de pédale admissible est transmise au modèle de conducteur pour contrôler le véhicule, **caractérisé en ce que**
> le modèle de conducteur comprend un module de contrôle (300), au moyen duquel une valeur de réglage est déterminée pour régler la pédale d'accélérateur, dans lequel la valeur de réglage est limitée de façon dynamique par une valeur limite supérieure qui est déterminée sur la base de la valeur (313) de la position de pédale admissible.

2. Procédé selon la revendication 1, **caractérisé en ce que**

> la valeur limite supérieure de la valeur de réglage de la pédale est déterminée au moyen du module de contrôle (300) en augmentant la valeur limite supérieure de la demande de puissance en conséquence, dans le cas où une demande de puissance à fournir par l'entraînement du véhicule augmente, et
> dans le cas où la demande de puissance actuelle est inférieure à une valeur caractéristique pondérée correspondant à une valeur pondérée par un facteur de pondération d'une demande de puissance précédant immédiatement la demande de puissance actuelle, la valeur pondérée est choisie comme valeur limite supérieure.

3. Procédé selon la revendication 2, **caractérisé en ce**

**qu'**

une valeur de transfert transmise au module de contrôle (300) pour déterminer la valeur limite supérieure, correspond à une valeur de la position de pédale admissible multipliée par un facteur.

4. Procédé selon la revendication 2 ou 3, **caractérisé en ce que**

   le facteur de pondération correspond à une valeur inférieure à un.

5. Procédé selon l'une quelconque des revendications 1 à 4, **caractérisé en ce que**

   le module de contrôle (300) ajuste la valeur de réglage au moyen d'un régulateur PID (307).

6. Procédé selon l'une quelconque des revendications 1 à 5, **caractérisé en ce que**

   la valeur de réglage est limitée par une valeur limite inférieure,
   la valeur limite inférieure étant déterminée sur la base de la valeur (313) de la position de pédale admissible ou la valeur limite inférieure étant prédéterminée de manière fixe.

7. Procédé selon l'une quelconque des revendications précédentes, **caractérisé en ce que**

   le modèle de conducteur comprend un module de détermination d'accélération cible, au moyen duquel une puissance d'accélération à fournir par le véhicule est déterminée en déterminant pour une différence de vitesse entre une vitesse requise pour au moins un moment futur et une vitesse requise pour un moment actuel, et et à l'aide de la différence de vitesse déterminée, on détermine une puissance d'accélération à fournir pour compenser la différence de vitesse, et le module de détermination de l'accélération cible transmettant la puissance d'accélération à fournir déterminée au modèle de conducteur en tant que puissance d'accélération requise.

8. Procédé selon l'une quelconque des revendications précédentes, **caractérisé en ce que**
   le tracé de route prédéfini est un tracé de route détecté au moyen d'au moins un capteur du véhicule et/ou un tracé de route déterminé au moyen d'une carte numérique pour un itinéraire respectif à parcourir.

9. Dispositif de contrôle (200) d'exploitation d'un modèle de conducteur destiné au contrôle d'un véhicule, dans lequel le dispositif de contrôle permettant d'effectuer une marche d'essai pour le présent véhicule comprend un module de conducteur (201) configuré pour exploiter le modèle de conducteur, le module de conducteur comprenant un module de véhicule (203) configuré pour

   déterminer une position de pédale à régler sur le véhicule,
   le module de conducteur comprenant un module de détermination des besoins (205) configuré pour déterminer une puissance requise en pourcentage d'une puissance totale qui peut être fournie par un entraînement du véhicule, dans lequel la puissance requise correspond à une puissance requise nécessaire pour déplacer le véhicule à une vitesse requise et/ou une accélération requise le long d'un tracé de route prédéterminé, et dans lequel
   le module de conducteur comprend un module d'attribution (207) configuré pour attribuer une valeur (313) d'une position de pédale admissible à la puissance requise, et dans lequel
   le module de conducteur comprend un module de transfert (209) configuré pour transférer la valeur (313) de la position de pédale admissible au modèle de conducteur pour contrôler le véhicule, **caractérisé en ce que**
   le module de conducteur comprend un module de contrôle (300) configuré pour déterminer une valeur de réglage permettant d'ajuster la pédale d'accélérateur, dans lequel
   le module de contrôle (300) est configuré pour limiter la valeur de réglage de façon dynamique au moyen d'une valeur limite supérieure, et à déterminer la valeur de réglage supérieure sur la base de la valeur (313) de la position de pédale admissible.

10. Dispositif de contrôle selon la revendication 9, **caractérisé en ce que**
    le module de conducteur (201) comprend un module de détermination de l'accélération cible configuré pour déterminer une puissance d'accélération à fournir par le véhicule, en déterminant pour une différence de vitesse entre une vitesse requise pour au moins un moment futur et une vitesse requise pour un moment actuel et en déterminant à l'aide de la différence de vitesse déterminée la puissance d'accélération à fournir pour compenser la différence de vitesse, le module de conducteur (201) étant configuré pour transmettre la puissance d'accélération déterminée à fournir au modèle de conducteur comme puissance d'accélération requise.

11. Utilisation d'un dispositif de contrôle (200) selon l'une des revendications 9 ou 10, permettant d'effectuer une marche d'essai pour un véhicule.

12. Produit de programme informatique comprenant des moyens de code de programme qui configurent un ordinateur pour exécuter toutes les étapes selon au moins un procédé des revendications 1 à 8 lorsqu'elles sont exécutées sur l'ordinateur.

100

101

103

105

107

Fig. 1

Fig. 2

Fig. 3

**IN DER BESCHREIBUNG AUFGEFÜHRTE DOKUMENTE**

**In der Beschreibung aufgeführte Patentdokumente**

- US 5430645 A
- DE 4240756 A1
- DE 4103579 A1